# EUROPEAN PATENT APPLICATION

(11) **EP 1 511 235 A1**
(43) Date of publication of application: **02.03.2005**
(21) Application number: 03292118.1
(22) Date of filing: 28.08.2003
(51) Int. Cl.: H04L 12/56

(54) **Distributed pairing between different terminals**

(71) Applicant: ALCATEL, 75008 Paris (FR)
(72) Inventor: Jeannerod, Laurent, 67205 Oberhausbergen (FR)
(74) Representative: Wetzel, Emmanuelle

(57) **Abstract**

It is proposed a solution enabling the use of a personal portable device over a network comprising terminals allowing a wireless communication with that device without implying each time a new awkward pairing with the terminals. This is achieved by allocating an unique address to a personalized profile. Said unique address will be used for a pairing procedure between a terminal of the network and a personal portable device. After a successful pairing, such initialization will be affected to said personalized profile. Latter will be used for future wireless communication between said personal portable device and a terminal. Advantageously, a pairing procedure will not be anymore necessary after performing once such initialization since for a set up of a wireless communication some parameters affected to the called personal profile will be used. Among other, the unique address allocated to said personalized profile will be assigned to said terminal.

## Description

### Technical Field

The present invention relates to a method for wireless communication between a personal portable device and a terminal connected to a network. It is also related to a computer readable medium having a computer program thereon, the computer program comprising codes for performing a setup of a personalized profile for terminals being connected to a network by entering on one of said terminals some user specific parameters to be stored in said personalized profile. Furthermore, it is related to a pairing terminal to be connected to a network. And it is also related to a network comprising a plurality of terminal with at least few of them comprising an interface for a wireless communication with a personal portable device.

### Background of the invention

Personal portable devices such as mobile phones, laptop computers, personal digital assistants (PDAs) and headsets have traditionally been connected together by cables. The major shortcomings of this approach include the number of cables to be carried around and the difficulties of getting compatible connections between devices from different vendors.

New wireless technologies like Bluetooth or IEEE 802.11b have emerged recently that allow these devices to communicate between each other without cables. These technologies are specifically designed to provide a very cost effective, standardized solution for personal portable devices to communicate wirelessly within their restricted area in a safer manner. They are short range, they carry multimedia information content, they are standardized and allow to define a Personal Area Network (PAN). Latter are also called piconets and can be implemented also at home. They provide a peer-to-peer communications over short distances.

The PAN provides a useful solution for an user and his personal devices. A logical extension to this model is for one member of the PAN to be a laptop or PC that is connected to a corporate Local Area Network (LAN). Extending this concept to an office environment leads to the conclusion that there will be many PANs over the premises. It is by all means possible to imagine that each person able to access to said LAN will have an individual PAN with a LAN connection.

Such a managed group of PANs is described as a "meta-PAN". A meta-PAN allows all the personal terminals to be integrated into the enterprise information systems. This integration is achieved by applying some policies to manage, e.g. radio interference between PANs, security and access control of devices, coverage, capacity and connectivity to central services.

The Bluetooth technology provide usage protection and information confidentiality by providing security measures both at the application layer and the link layer. These measurement shall be appropriate for a peer environment. This means that in each Bluetooth unit, the authentication and encryption routines are implemented in the same way. Several different entities are used for maintaining security at the link layer. Among other a public device address (BD_ADDR) is used for that while being unique for each device. The Bluetooth public device address will be used for computing secret keys like an authentication key needed at link layer with the help of some algorithm during initialization i.e. pairing.

In US2002/0090912 is described an unified passcode pairing of piconets devices. It shall simplify the awkward way of configuring or pairing Bluetooth devices by the user. Indeed, when a user buys or replaces a Bluetooth equipped electronic device, the user must configure the new Bluetooth device for communication with relevant and desired devices in the relevant piconet. Conventionally, Bluetooth communicating devices may be pre-configured at the factory to include the unique device addresses of one another to allow communications there between. However, if a pre-configured device breaks and requires replacement by a user, reconfiguration of the replacement device to include the identity of a paired Bluetooth device is cumbersome and error prone at best. The solution proposed in US2002/0090912 is based on a simplified pairing procedure by making a selective discovery of Bluetooth devices with matching of a PIN or pass code. Such solution is restricted to the management of subgroups of devices (piconets) and does not solve the problem of the portability of such device around a LAN.

### Summary of the invention

In view of the above, it is an object of the present invention to propose a solution enabling the use of a personal portable device over a network comprising terminals allowing a wireless communication with that device without implying each time a new awkward pairing with the terminals.

This object is achieved in accordance with the invention by allocating an unique address to a personalized profile. Said unique address will be used for a pairing procedure between a terminal of the network and a personal portable device. After a successful pairing, such initialization will be affected to a personalized profile. Latter will be used for future wireless communication between said personal portable device and a terminal connected to said network. Advantageously, a pairing procedure will not be anymore necessary after performing once such initialization since for a set up of a wireless communication some parameters affected to the called personal profile will be used. Among other, the unique address allocated to said personalized profile will be assigned to said terminal.

An embodiment of the present method comprises the step of starting a wireless communication between a personal device and a terminal after an identification procedure of the respective user will be completed successfully. This can take the form of a login procedure or a recognition of said portable device e.g. via radio detection.

The present invention is advantageously but not exclusively defined for the Bluetooth technology with its unique Bluetooth device addresses BD_ADDR.

Advantageously, a pairing terminal will be used according to the invention. It is characterized in that it is dedicated to assign the unique addresses to terminals of the network LAN. This will occur when a wireless communication with a personal portable device and a terminal connected to the network will be started. The pairing terminal is therefore dedicated to avoid any conflict with the unique addresses and the terminals connected to that network.

The invention further relates to a network comprising a plurality of terminals with at least few of them comprising an interface for a wireless communication with a personal portable device. Such network comprises also a pairing terminal to manage at least part of the necessary parameters for the wireless communication, that parameters being possibly stored or affected to the personalized profile.

Advantageous developments of the invention are described in the dependent claims, the following description and the drawings.

### Description of the drawings

An exemplary embodiment of the invention will now be explained further with the reference to the attached drawings in which:
Fig. 1 is a schematic view of a wireless communication between portable devices and terminals of a network using state of the art procedure;
Fig. 2 is a schematic view of a wireless communication between portable devices and terminals of a network according to the present invention.

### Detailed description of preferred embodiments

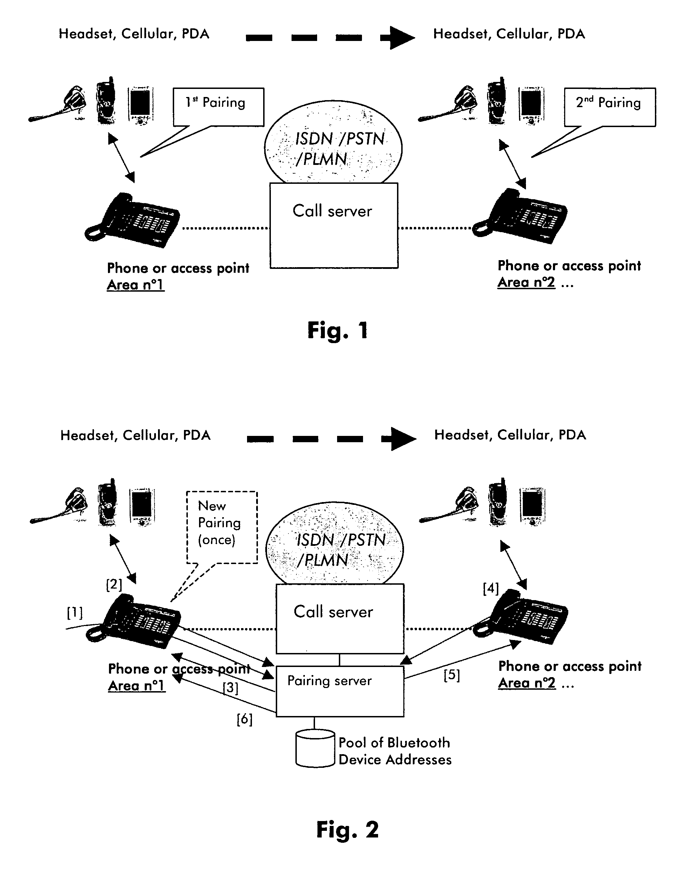

On figure 1 is described how a wireless communication can be set up between a personal portable device like a headset, a mobile phone or a PDA and a terminal. In the case shown, the terminal is a phone or access point connected to a network i.e. to a call server being part of that network. According to the state of the art, a wireless communication will be performed each time by the help of a new pairing on each equipment of that infrastructure that can be used. There is no dedicated data exchanges between access points, to facilitate the pairing. Figure 1 shows the situation of a user moving from one area to another area, with his personal portable device.

At first, the user has made a pairing procedure with Phone or access point in area n°1, to be able to use his equipment in this area. When the user leaves area n°1, and goes into area n°2, he needs to repeat the pairing procedure. This pairing procedure will have to be repeated each time the user leaves an area. More over, the number of pairing is limited inside each devices. So it means it will have a limit regarding management of mobility.

In contrary, using present invention will solve such limitation. On figure 2 is shown a schematic view of a wireless communication between portable devices and terminals of a network according to the present invention. It is not restricted to Bluetooth technology but for clarity, we will further refer to that technology.

With Bluetooth standard, the procedure of pairing is necessary for using security procedures of authentication and encryption. It is based on input of pairing PIN code on both devices that try to communicate, and generates at the end a common link key that is stored inside each equipment that have been paired. This link key (Klink) is assigned to a dedicated Bluetooth Device Address (BD_ADDR).

For example: Device n°1 (BD_ADDR1) has been paired with device n°2 (BD_ADDR2). It means in the memory of device n°1, after pairing procedure with device n°2, there is an association between BD_ADDR1 and Klink. And in the memory of device n°1, after procedure of pairing, there is an association between BD_ADDR1 and Klink.

On figure 2 is shown a solution according to the present invention for managing wireless communication over a LAN. It is not every time possible on wireless devices to access to their memory to be able to setup the pairing table and consequently the link key. Therefore, it is proposed here to be able to present to the wireless devices, the same Bluetooth device address in different areas. By this way, there is only one pairing to do with the mobile devices. After such initialization, the Bluetooth configuration is transferred with the user, possibly by affecting it to his personalized profile.

Following the description on figure 2, we see that:
[1] During initialization of Bluetooth equipment (access point or phone or PC), equipment will send a request of one Bluetooth address to the pairing server. This address is taken in a list of available Bluetooth addresses assigned to the system.
[2] User is identified by the system, after a manual action on phone (with a login procedure) or with wireless system (e.g. radio or IR detection), after a recognition of BD_ADDR of his own wireless devices.
[3] Pairing server can give a BD_ADDR that is assigned to the user, and can restore his personalized profile, and pairing context corresponding to every wireless devices declared. Pairing for new devices can be made at this step.
[4] user moves to area n°2. As for step [2], user is detected in the new area.
[5] Pairing server, can give a BD_ADDR that is assigned to the user, and can restore his personalized profile, and pairing context corresponding to every wireless devices declared.
[6] Pairing server can restore in equipment of area n°1, a new BD_ADDR out of the list of available addresses.

The method for a wireless communication between a personal portable device and a terminal connect to the network comprises several steps one another possibly in different orders. Indeed, an user can be motivated to set up a personalized profile for the terminals being connected to that network independently to an initialization of personal portable device. The user will enter by hand or transfer via some link on one of said terminal some user specific parameters like an address book, direct key for call, using of password, call forward status, ..etc. All that will be stored in some personalized profile. The network can be set up in such a manner that e.g. an unique address will be automatically assigned to said personalized profile when first set up or at some specific stage. That unique address will be chosen out of a list of available addresses stored on some place. This list of available addresses may be obtained when building up or updating (modernize) the whole network.

Such unique address which under Bluetooth technology is called a BD_ADDR will be assigned to the terminal connected to the network from which the user will access his personal profile. In such a manner, it can be used to perform any initialization i.e. pairing procedure of any personal portable device with that terminal. It implies that latter as well as the portable device comprise an interface like a Bluetooth interface to perform a wireless communication between each other. If we take that for granted, then all the parameters corresponding to a successful initialization of the portable device can be stored into the personalized profile of the user. These parameters will be used for any future wireless communication between said portable device and a terminal connected to the network.

For that and at first an identification of the user at the chosen terminal of the network will have to be completed. This can be in form of a login procedure where the user has to call e.g. his personalized profile and to enter some password. But, it is also conceivable that at least part of the login procedure is performed automatically by some recognition of the portable device by the terminal e.g. in form of a radio detection. This use may then have only to enter some password on the chosen terminal to confirm the whish to set up a wireless communication with that portable device.

To avoid any collision, it is crucial that only one terminal of the network at a time will be assigned the chosen unique address. Therefore, it may be advantageous to dedicate a terminal like a server of that network for the pairing of the different portable devices. Said pairing device may also take the task of assigning the unique address out of the personalized profile as well as all the necessary parameters like link keys to the terminal chosen for setting up the wireless communication.

The use of the present invention offers a lot of advantage in comparison to prior art. Among other, the user needs to initialize - to pair - his own portable device only one time i.e. the first time he use it in the area covered by the network - LAN. Moreover, the user can keep his e.g. Bluetooth configuration everywhere, as part of his own call server profile.

## Claims

1. A method for wireless communication between a personal portable device and a terminal connected to a network, said method being **characterized by** the steps of:
• setting up a personalized profile for terminals being connected to a network by entering on one of said terminals some user specific parameters to be stored in said personalized profile;
• allocating to said personalized profile an unique address out of an list of available addresses, said unique address to be assigned to the terminal used for accessing at least part of the personalized profile, while said unique address to be used to enable a wireless communication between said terminal and at least a personal portable device;
• initializing said wireless communication by performing a pairing procedure between said personal portable device and said terminal, said initialization being affected to said personalized profile to be used for future wireless communication between said personal portable device and a terminal connected to said network.

2. The method according to claim 1 **characterized in that** the future wireless communication between said personal portable device and a terminal connected to said network will be started after an identification procedure of the corresponding user will be completed at said terminal connected to the network.

3. The method according to claim 2 **characterized in that** said identification procedure comprising a login procedure on said terminal connected to the network.

4. The method according to claim 2 **characterized in that** said identification procedure comprising a recognition of said personal portable device by the terminal connected to the network.

5. The method according to claim 1 **characterized in that** said personalized profile being stored on a centralized server accessible from the terminals connected to the network.

6. The method according to claim 1 **characterized in that** said list of unique addresses being managed by a pairing terminal controlling the assignment of said unique address to the terminal connected to the network.

7. The method according to claim 1 **characterized in that** said wireless communication being performed using a radio link based on Bluetooth technology.

8. The method according to claim 7 **characterized in that** said unique address being a Bluetooth device address BD_ADDR.

9. A computer readable medium having a computer program thereon, the computer program comprising codes for performing:
• a setup of a personalized profile for terminals being connected to a network by entering on one of said terminals some user specific parameters to be affected to said personalized profile;
said codes being further **characterized for** performing:
• an allocation to said personalized profile of an unique address out of an available list of addresses, said unique address to be assigned to the terminal used for accessing at least part of the personalized profile, while said unique address to be used to enable a wireless communication between said terminal and at least a personal portable device;
• an initialization of said wireless communication using a pairing procedure between said personal portable device and said terminal, said initialization being stored in said personalized profile to be used for future wireless communication between said personal portable device and a terminal connected to said network.

10. The computer readable medium according to claim 9 comprising codes characterized for performing a setup of a wireless communication between a personal portable device and a terminal connected to the network by assigning to said terminal the unique address allocated to the used personalized profile and by applying the corresponding initialization.

11. A pairing terminal to be connected to a network **characterized in that** it is dedicated to assign unique address to terminals connected to said network, said respective unique address being used for performing a pairing procedure between a terminal connected to said network and a personal portable device while said unique address being allocated to a personalized profile and assigned to the terminal used for accessing at least part of the personalized profile.

12. The pairing terminal according to claim 11 **characterized in that** it has access to a list of available addresses being possibly Bluetooth device addresses BD_ADDR as choice for the unique address to be assigned.

13. A network comprising a plurality of terminals with at least few of them comprising an interface for a wireless communication with a personal portable device, said network being **characterized in that** it comprises a pairing terminal dedicated to assign an unique address out of a list of available addresses to a terminal for performing a pairing procedure with a personal portable device, said chosen unique address being allocated to a personalized profile to be stored at a call terminal being part of said network, the personalized profile being assigned to the terminal used for accessing at least part of the personalized profile.
